Europäisches Patentamt

European Patent Office

Office européen des brevets

(19)

(11) Numéro de publication: **0 242 261**
**A1**

(12)

# DEMANDE DE BREVET EUROPEEN

(21) Numéro de dépôt: **87400723.0**

(22) Date de dépôt: **02.04.87**

(51) Int. Cl.⁴: **A 47 J 41/02**

(30) Priorité: **07.04.86  FR 8604918**

(43) Date de publication de la demande: **21.10.87**
**Bulletin 87/43**

(84) Etats contractants désignés: **DE ES GB**

(71) Demandeur: **VERRERIE CRISTALLERIE D'ARQUES J.G. DURAND & Cie Société à Responsabilité Limitée, 41, Avenue du Général de Gaulle, F-62510 Arques (FR)**

(72) Inventeur: **Durand, Philippe, Les Daneaux Chemin de la Garenne, F-62510 Arques (FR)**

(74) Mandataire: **Petrovitch, Suzanne et al, Office Blétry 2, boulevard de Strasbourg, F-75010 Paris (FR)**

(54) **Récipient isotherme en verre.**

(57) Récipient isotherme comportant une double enveloppe (21, 22) argentée intérieurement et dans laquelle le vide a été fait, en verre d'une épaisseur permettant une résistance aux chocs suffisante, l'enveloppe intérieure (22) a été soudée à l'enveloppe extérieure (21) après introduction par le fond de l'enveloppe extérieure (21) et le fond rapporté (25) du récipient a une forme telle que la tubulure de mise sous vide (23), une fois fermée, est à l'abri des chocs, le verre utilisé étant un verre de borosilicate de bonne résistance aux chocs thermiques. De préférence le récipient comporte un manchon de protection (30) dans l'espace sous vide, entre l'enveloppe intérieure (22) et l'enveloppe extérieure (21), placé contre la surface de l'enveloppe intérieure (22).

EP 0 242 261 A1

ACTORUM AG

L'invention concerne un récipient isotherme en verre sans habillage de protection.

Les récipients isothermes (bouteilles thermos, vases de Dewar,..) sont fabriqués en verre mince pour obtenir une bonne résistance aux chocs thermiques. De ce fait, la résistance mécanique est très faible et il est nécessaire de prévoir un habillage protecteur en métal ou en matière plastique. En outre, la fabrication de la double enveloppe est longue et complexe: on prépare deux ampoules fermées à un bout coulissant l'une dans l'autre, l'ampoule intérieure ayant initialement un col dont l'ouverture correspond à l'ouverture du récipient final (cette ouverture étant relativement peu importante pour limiter les pertes caloriques au niveau du bouchon); on donne aux ampoules la forme finale souhaitée, on rétrécit le col de l'ampoule extérieure et on la soude avec celui de l'ampoule intérieure; on ouvre le fond de l'ampoule extérieure pour mettre en place un tube de mise sous vide, on effectue l'argenture sur les surfaces en vis-à-vis des deux ampoules et, après avoir fait le vide, on ferme le tube par soudage; et on réalise l'habillage de l'ensemble. Toutes ces opérations font que le récipient obtenu est coûteux alors qu'il s'agit d'un objet de grande consommation.

Des récipients isothermes en verre, porcelaine, matière plastique sont connus également d'après des brevets relativement anciens mais restent très proches par leur structure et surtout leur forme (en particulier leur encolure étroite) des bouteilles thermos classiques. On citera par exemple les brevets DE- 303 699, US-A-1 473 814, FR-A-1 078 853 et GB-A-138 619.

L'invention fournit donc un récipient isotherme comportant une double enveloppe argentée interieurement dans laquelle le vide a ete fait, en verre d'une épaisseur permettant une résistance aux chocs suffisante, l'enveloppe intérieure et l'enveloppe extérieure ont été soudées apres introduction de l'enveloppe intérieure par le fond de l'enveloppe extérieure et le fond rapporté du récipient a une forme telle que la tubulure de mise sous vide, une fois fermée, est à l'abri des chocs, le verre utilisé pour la fabrication des deux enveloppes étant un verre résistant aux chocs thermiques, par exemple un verre de borosilicate.

Ceci permet de se dispenser de l'habillage en métal ou en matière plastique utilisé de façon classique pour protéger les récipients isothermes fabriqués en verre mince ayant une bonne résistance aux chocs thermiques mais de faible résistance aux chocs mécaniques.

Dans les récipients isothermes comportant une double enveloppe entre laquelle un vide a été établi, il existe un risque d'implosion en cas de rupture de l'une des enveloppes par suite d'un choc thermique ou mécanique trop important. Ce risque n'entraîne pas de danger pour l'utilisateur des récipients isothermes classiques car les fragments de verre sont retenus par l'habillage protecteur métallique ou plastique.

Par contre lorsque ce phénomène se produit au moment de la rupture de l'enveloppe intérieure d'un récipient isotherme selon l'invention, on a constaté que l'implosion provoquée projetait à grande vitesse les plus gros fragments de l'enveloppe intérieure contre l'enveloppe extérieure qui peut à son tour casser sous l'effet de ce choc mécanique.

Pour remédier à ce risque, la présente invention prévoit l'adjonction d'un manchon de protection dans l'espace sous vide et contre la surface de l'enveloppe intérieure.

Le manchon est maintenu en place par divers moyens appropriés, et dans le cas d'une verseuse, ces moyens sont constitués par des pattes rabattues, apres la mise en place du manchon, contre les parties rétrécies de l'enveloppe intérieure de la verseuse.

Ce manchon peut être constitué par un treillis métallique, en matières plastiques, en fibres textiles ou tout autre matériau susceptible de former un manchon retenant les éclats de verre mais laissant passer le liquide d'argenture. Le matériau doit être résistant aux températures rencontrées lors de l'assemblage du récipient isotherme; toutefois comme ces températures varient en particulier selon les techniques d'argenture, le choix final du matériau dépendra des conditions exactes de fabrication, comme expliqué ci-après.

L'invention va maintenant être décrite plus en détail avec référence aux dessins dans lesquels :

les figures 1a à 1c représentent schématiquement la fabrication d'une bouteille isolante selon la technique antérieure.

Les figures 2a à 2d représentent schématiquement la fabrication d'un récipient isotherme selon l'invention.

La figure 3 représente en coupe une forme particulière d'un récipient isotherme selon l'invention, muni en outre d'un manchon protecteur.

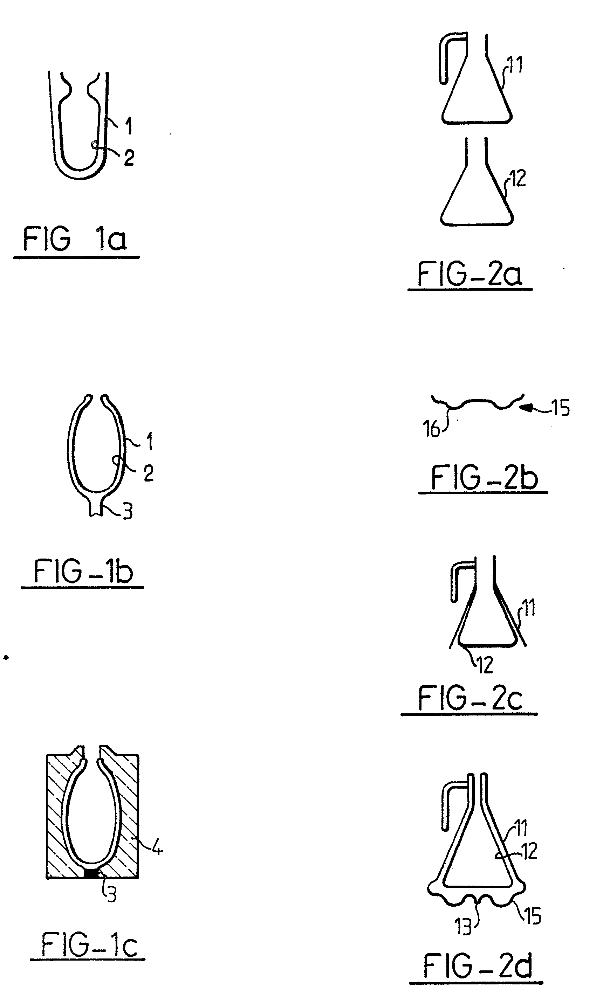

Les bouteilles isothermes sont fabriquées à partir de deux ampoules, une ampoule extérieure 1 et une ampoule intérieure 2, en verre mince. L'ampoule intérieure 2 dont la partie supérieure comporte un rétrécissement est introduite par coulissement par l'ouverture supérieure de l'ampoule extérieure 1 (figure 1a). On procède ensuite aux opérations classiques de soufflage des deux ampoules pour les amener à la longueur et à la forme voulue, de soudage au niveau du rétrécissement de l'ampoule intérieure et de fixation de la tubulure de mise sous vide 3 à la partie inférieure de l'ampoule extérieure 1 (figure 1b). Après avoir argenté les surfaces en vis-à-vis à l'intérieur de la double enveloppe, on y fait le vide et on ferme par soudage la tubulure 3. On procède ensuite à l'habillage de l'ensemble pour le protéger des chocs (figure 1c).

Les figures 2a à 2d décrivent succintement la fabrication d'un récipient isotherme selon l'invention. Bien entendu la forme du récipient n'est pas limitée à la forme tronconique représentée. On prépare tout d'abord une enveloppe extérieure 11, comportant avantageusement une anse venue de moulage, et une enveloppe intérieure 12 de même forme générale mais de dimensions légèrement inférieures de façon à pouvoir laisser entre les deux enveloppes un espace de quelques millimètres, de 2 à 5 mm par exemple (figure 2a). Lorsque l'enveloppe extérieure 11 est fabriquée avec un fond, ce qui sera généralement le cas pour des raisons de facilité, ce fond est découpé et on introduit l'enveloppe intérieure 12 dans l'enveloppe extérieure 11.

Pendant que l'on fabrique le fond 15 du récipient final comportant un rebord extérieur circulaire 16 formant office de pied définissant une partie creuse au centre du fond (figure 2b), on soude l'une à l'autre les deux enveloppes au niveau du col (figure 2c). On effectue l'argenture de manière classique, puis on fixe le fond 15 sur l'enveloppe extérieure (par soudage), on forme au centre une tubulure de mise sous vide, on fait le vide entre les deux enveloppes et on ferme la tubulure 13 de manière à ce que sa hauteur résiduelle soit inférieure à la profondeur de la partie creuse entre le rebord 16 du fond 15. L'emplacement exact et la forme du rebord 16 ainsi que ses dimensions en largeur sont variables et dépendront essentiellement de la forme du récipient isotherme.

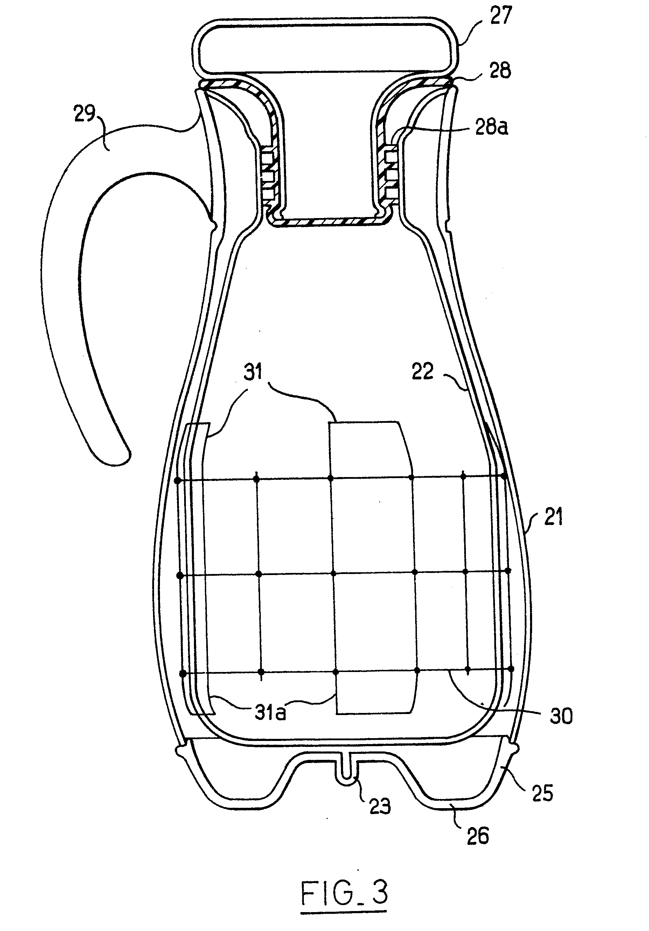

La figure 3 représente un exemple de récipient isotherme constituant une verseuse. L'enveloppe extérieure 21 et l'enveloppe intérieure 22 ont la même forme générale mais l'enveloppe extérieure est plus ventrue que l'enveloppe intérieure dont le plus grand diamètre reste inférieur au diamètre d'ouverture de l'enveloppe extérieure. L'enveloppe intérieure est moins ventrue que l'enveloppe extérieure et elle comporte en particulier à sa partie inférieure une région pratiquement cylindrique correspondant au plus grand diamètre, au-delà de laquelle le diamètre diminue progressivement pour former d'un côté le fond plat et de l'autre l'encolure rétrécie de l'enveloppe intérieure.

Il est prévu d'enfiler autour de l'enveloppe intérieure un manchon de protection qui peut prendre la forme représentée sur la figure, à savoir celle d'un treillis de fil 30, par exemple métallique ou de matière plastique suffisamment rigide, comportant à ses parties supérieure et inférieure des pattes 31,31a, qui sont rabattues contre les surfaces rétrécies de l'enveloppe intérieure après mise en place du treillis autour de la partie cylindrique.

Comme métal pour le treillis, on peut utiliser l'acier inoxydable ou un métal inoxydable en général, par exemple des alliages à base d'aluminium, de l'aluminium anodisé, etc... L'intérêt de l'utilisation d'un métal ioxydable est qu'il n'est pas modifié en cas de chauffage à températures élevées lors de la fabrication et qu'il n'interfère pas avec l'argenture par voie chimique.

Le matériau utilisé pour le treillis doit être résistant à la chaleur lorsque la fabrication du récipient comporte une étape de chauffage. Ceci se produit en particulier lorsque après le dépôt d'argent, on effectue un dégazage (non obligatoire) à une température de 300 à 400°C pour chasser l'eau présente avant ou simultanément à la mise sous vide. Dans un tel cas, on ne peut pas utiliser les matériaux plastiques courants que l'on pourra par contre parfaitement utiliser si l'on ne dépasse pas leur température de ramolissement lors de l'assemblage des pièces.

On peut également utiliser, toujours sous réserve de sa résistance à la chaleur en cas de chauffage pendant la fabrication, n'importe quel matériau formant des mailles, laissant passer le liquide d'argenture, et par exemple des fibres textiles, naturelles, artificielles ou synthétiques, à l'état tissé, non tissé ou tricoté. Dans un tel cas, il est possible que l'élasticité propre du manchon de protection suffise à assurer son maintien contre la surface de l'enveloppe intérieure sans qu'il soit nécessaire de prévoir les pattes 31.

L'enveloppe 21 comporte une anse 29 venue de moulage, pour faciliter la manipulation de la verseuse. L'anse pourrait aussi être rapportée par soudage.

Le fond 25, qui a sur la figure 3, une épaisseur supérieure à celle des enveloppes extérieure et intérieure pour améliorer sa resistance car c'est lui qui est le plus soumis aux chocs, comporte un rebord 26 formant pied. La tubulure de mise sous vide 23 a, une fois fermée, une hauteur résiduelle inférieure à la profondeur du creux formé par le rebord.

Un bouchon classique 27 est muni d'une cape 28 en matière plastique souple pourvue d'ailettes 28a pour améliorer l'étanchéité.

En outre le récipient peut comporter un bec verseur (non représenté) qui ne compromet pas l'étanchéité de la fermeture assurée par le contact entre la partie cylindrique du col et la cape à ailettes.

Bien entendu, cette forme de réalisation n'est qu'un exemple et le récipient isotherme peut prendre toutes les formes désirées de pots, carafes, cruches, etc... car le fait d'introduire l'ampoule intérieure par le fond de l'ampoule extérieure permet une grande variété de formes et ne limite pas à la forme cylindrique allongée obligatoire des bouteilles isolantes antérieures.

De façon générale, le verre utilisé pour fabriquer tous les éléments constitutifs du récipient sera tel qu'il permettra l'assemblage de ces éléments, par le procédé utilisé, et en particulier par soudage. On utilise avantageusement un verre de borosilicate connu pour sa bonne résistance aux chocs thermiques. On peut employer en particulier un verre de borosilicate ayant un coefficient de dilatation linéaire intermédiaire, de l'ordre de $65.10^{-7}$, celui-ci présentant de bonnes caractéristiques de soudage.

Mais d'autres verres peuvent être utilisés et on peut envisager d'utiliser des verres différents pourvu toutefois qu'il soit possible de les assembler. Ceci est particulièrement intéressant lorsque l'on désire que l'enveloppe extérieure ait un aspect particulier (verre coloré, opaque, à effet de surface etc...).

Bien entendu l'article fini peut être décoré pour tous moyens connus pour le verre (impression d'émaux, pellicule de plastique) ou garni d'un habillage décoratif (et non protecteur) sur le corps ou sur la base, par exemple à l'aide d'une pièce métallique ou plastique.

## REVENDICATIONS

1.- Récipient isotherme comportant une double enveloppe (11,12;21,22) argentée intérieurement et dans laquelle le vide a été fait, en verre d'une épaisseur permettant une résistance aux chocs suffisante, l'enveloppe intérieure (12;22) a été soudée à l'enveloppe extérieure (11;21) après introduction par le fond de l'enveloppe extérieure (11;21) et le fond rapporté (15;25) du récipient a une forme telle que la tubulure de mise sous vide (13;23), une fois fermée, est à l'abri des chocs, caractérisé en ce que le verre utilisé est un verre de borosilicate de bonne résistance aux chocs thermiques.

2.- Récipient isotherme selon la revendication 1, caractérisé en ce que le verre est un verre ayant un coefficient de dilatation linéaire de l'ordre de $65.10^{-7}$.

3.- Récipient isotherme selon l'une ou l'autre des revendications 1 et 2, caractérisé en ce qu'il comporte un manchon de protection (30) dans l'espace sous vide, entre l'enveloppe intérieure (22) et l'enveloppe extérieure (21), placé contre la surface de l'enveloppe intérieure (22).

4.- Récipient selon la revendication 3, caractérisé en ce que le manchon (30) est maintenu en place par des dispositifs de fixation.

5.- Récipient selon la revendication 4, consistant en une verseuse à bords rétrécis à partir d'une partie ventrue, caractérisé en ce que les dispositifs de fixation du manchon sont constitués par des pattes (31,31a) rabattues contre les parties rétrécies de l'enveloppe intérieure (22).

6.- Récipient selon l'une quelconque des revendications 3 à 5, caractérisé en ce que le manchon de protection est en treillis métallique.

7.- Récipient selon l'une quelconque des revendications 3 à 5, caractérisé en ce que le manchon de protection est un treillis de matière plastique.

8.- Récipient selon l'une quelconque des revendications 3 à 5, caractérisé en ce que le manchon de protection est en fibres textiles tissées, non tissées ou tricotées.

FIG 1a

FIG_1b

FIG_1c

FIG-2a

FIG-2b

FIG-2c

FIG-2d

FIG_3

**Office européen des brevets**

**RAPPORT DE RECHERCHE EUROPEENNE**

Numéro de la demande

EP 87 40 0723

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | FR-A- 931 654 (SAINT-GOBAIN, CHAUNY & CIREY) * Page 1, lignes 38-46 * | 1 | A 47 J 41/02 |
| Y,D | DE-C- 303 699 (HINKEL) * Figure; page 1, lignes 8-22 * | 1 | |
| A | R.H. DOREMUS: "Glass science", 1973, page 102, John Wiley & Sons, New York, US * Page 102 * | 1,2 | |
| A,D | US-A-1 473 814 (DURAND) * Revendication 1 * | 1 | |
| A,D | FR-A-1 078 853 (DOMEC & CIE) * Figure 2 * | 1 | DOMAINES TECHNIQUES RECHERCHES (Int. Cl.4) |
| A,D | GB-A- 138 619 (THE MANTLE LAMP CO.) * Figure 1; page 1, lignes 56-68 * | 1 | A 47 J |
| A | GB-A- 22 571 (GOLBY)(1909) * Figures 1,2 * | 1 | |
| A | US-A-1 880 358 (PAYSON et al.) * Page 1, lignes 1-21; figure 1 * | 3,8 | |
| | --- -/- | | |

| Le présent rapport de recherche a été établi pour toutes les revendications | | |
|---|---|---|
| Lieu de la recherche LA HAYE | Date d'achèvement de la recherche 03-08-1987 | Examinateur BEUGELING G.L.H. |

| | **DOCUMENTS CONSIDERES COMME PERTINENTS** | | Page   2 |
|---|---|---|---|
| Catégorie | Citation du document avec indication, en cas de besoin, des parties pertinentes | Revendication concernée | CLASSEMENT DE LA DEMANDE (Int. Cl 4) |
| A | GB-A-1 438 025  (THERMOS LTD) <br> * Page 1, lignes 54-74 * | 3 | |
| | --- | | |
| A | FR-A-  340 627  (BURGER) <br> *  Page 1, lignes 20-31; figure 3 * | 4-6 | |
| | ----- | | |
| | | | DOMAINES TECHNIQUES RECHERCHES (Int Cl.4) |

Le présent rapport de recherche a été établi pour toutes les revendications

| Lieu de la recherche <br> LA HAYE | Date d'achèvement de la recherche <br> 03-08-1987 | Examinateur <br> BEUGELING G.L.H. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

OEB Form 1503 03 82